Europäisches Patentamt

European Patent Office

Office européen des brevets

(11) Veröffentlichungsnummer: **0 196 498 B1**

# (12) EUROPÄISCHE PATENTSCHRIFT

(45) Veröffentlichungstag der Patentschrift: **27.11.91**

(21) Anmeldenummer: **86103074.0**

(22) Anmeldetag: **07.03.86**

Die Akte enthält technische Angaben, die nach dem Eingang der Anmeldung eingereicht wurden und die nicht in dieser Patentschrift enthalten sind.

(51) Int. Cl.⁵: **G01C 21/00, G01C 21/22, G09B 29/10**

(54) Ortungs- und Navigationsverfahren für Landfahrzeuge.

(30) Priorität: **03.04.85 DE 3512127**

(43) Veröffentlichungstag der Anmeldung:
**08.10.86 Patentblatt 86/41**

(45) Bekanntmachung des Hinweises auf die Patenterteilung:
**27.11.91 Patentblatt 91/48**

(84) Benannte Vertragsstaaten:
**AT CH DE FR IT LI NL**

(56) Entgegenhaltungen:
**EP-A- 0 169 954**

(73) Patentinhaber: **ROBERT BOSCH GMBH
Postfach 50
W-7000 Stuttgart 1(DE)**

(72) Erfinder: **Freienstein, Bernd, Dipl.-Ing.
Kurzer Anger 37
W-3200 Hildesheim(DE)**
Erfinder: **Fuchs, Alois, Dipl.-Math.
Im Buckeberg 2
W-7516 Karlsbad-Auerbach(DE)**
Erfinder: **Neukirchner, E.-Peter, Dipl.-Ing.
An der Christuskirche 15
W-3200 Hildesheim(DE)**
Erfinder: **Pilsak, Otmar, Dr.-Ing.
Gneisenaustrasse 7
W-3200 Hildesheim(DE)**
Erfinder: **Schlögl, Dietmar, Dipl.-Ing.
Lange Halbe 19
W-3226 Sibbesse(DE)**

## Beschreibung

### Stand der Technik

Die Erfindung geht aus von einem Ortungs- und Navigations Verfahren für Landfahrzeuge nach der Gattung des patentanspruchs 1. Aus der NTZ, Band 36, 1983, Seiten 214 bis 223 ist bereits ein Ortungs- und Navigationssystem für Landfahrzeuge bekanntgeworden, das fahrzeugautonom arbeitet, d.h. keine externen Einrichtungen zur Stützung benötigt. Das dort beschriebene Ortungs- und Navigationssystem für Landfahrzeuge vermittelt jedoch keine Lehre für den praktischen Aufbau einer solchen Ortungs- und Navigationseinrichtung. Die Druckschrift leitet vielmehr auf der Grundlage der Netztheorie eine Möglichkeit her, wie ein fahrzeugautonomes Ortungssystem sich darstellen könnte.

Das erfindungsgemäße Verfahren mit den kennzeichnenden Merkmalen des patentanspruchs 1 hat demgegenüber den Vorteil, daß unabhängig vom Standort des Fahrzeuges bei der Initialisierung des Ortungssystems mit der Koppelnavigation begonnen wird. Dadurch wird erreicht, daß ein sicheres Aufsetzen des Ortungssystems unabhängig vom Startort auf die gestützte Koppelnavigation bewirkt wird. Mittels eines Mikrorechners und den in einem Speicher abgelegten Netzdaten wird aufgrund der Daten der Ortungseinrichtung und des Navigationssystemes von jedem Kreuzungspunkt aus der jeweils optimale Weg zum Ziel angewiesen wird. Für den optimalen Weg können Bewertungskriterien wie kürzeste Fahrzeit, kürzeste Fahrstrekke u.a, vorgesehen werden. Hierbei ist es gleichgültig, ob der Fahrer vorhergehenden Anweisungen gefolgt ist. Der Plan aller möglichen Fahrwege ist zweckmäßigerweise in einem Netzdatenspeicher gespeichert, auf den alle Systeme und Einrichtungen Zugriff haben. Der Netzdatenspeicher ist dabei als Festwertspeicher, oder beispielsweise als Compactdisc ausführbar. Da im Netzdatenspeicher die Kreuzungsgeometrie komplett abgelegt ist, ist es möglich, dem Fahrer einen Kreuzungspunkt so darzustellen, wie er ihn bei seiner Fahrt auf die Kreuzung sieht. Das Fahren im Kreuzungsbereich und das Einordnen vor dem Kreuzungsbereich wird ihm daher wesentlich erleichtert.

Vorteilhaft ist es, in die Ortungseinrichtung vor jedem Knoten die nachfolgenden Pfeildatensätze zu laden. Dadurch ist auch zwischen zwei Kreuzungsbereichen eine Ortung entlang des Pfeils möglich. Günstig ist es zudem, der Ortungseinrichtung gleichzeitig Meßwerte über den Weg und den Winkel der Fahrzeugbewegung zuzuführen, so daß ein leichter Vergleich mit dem Pfeildatensatz möglich ist. Die Linienortung zwischen zwei Kreuzungspunkten gestaltet sich dann besonders einfach, wenn alle Meßwerte der Fahrzeugbewegung in einem Pfeillängenzähler unter Berücksichtigung der Fahrzeugbewegung addiert werden. Vorteilhaft ist es auch, im Knotenbereich die Abstände der Fahrzeugposition zu den Fußpunkten der jeweiligen Nachfolgerpfeile zu bestimmen, und den Nachfolger als erreichten Pfeil zu erkennen, für den dieser Abstand ein relatives Minimum zu seinem Fußpunkt ergibt und dieses relative Minimum zugleich das absolute Minimum aller Abstände der Fahrzeugposition zu den Fußpunkten aller Nachfolger ist. Durch diese Maßnahme wird auf besonders sichere Art und Weise eine Erkennung des eingeschlagenen Weges im Kreuzungsbereich möglich. Dieses Kriterium ist auch dann sicher, wenn sich zwei Straßen im Kreuzungsbereich in einem sehr spitzen Winkel gabeln. Es ist vorteilhaft, die Differenz zwischen dem gefahrenen Winkel und dem vorgegebenen Winkel zu ermitteln, um zu erreichen, daß bei starken Abweichungen auch eine falsche Richtung erkannt wird. Das gleiche gilt für das ermittelte absolute Minimum des Abstandes zu den übrigen Straßen. Als weiteres Sicherheitskriterium ist es zweckmäßig nach der Erkennung des Nachfolgers festzustellen, ob eine Annäherung an einen weiteren Nachfolger erfolgt. Ist dies der Fall, so ist die Erkennung zu korrigieren. Zweckmäßig ist es, wenn vor dem Erreichen des Kreuzungsbereichs die Navigationseinrichtung eine Information über die nachfolgende Strecke ausgibt (Einordnungs- und Abbiegeanweisung). Diese Information kann bildlich oder gesprochen erfolgen und ermöglicht es dem Fahrer, sich rechtzeitig auf die örtlichen Gegebenheiten einzustellen. Die Auslösung der Information erfolgt auf einfache Art und Weise dadurch, daß vom Navigationssystem der empfohlene Nachfolger zur Ausgabe übertragen wird, sobald von der Ortungseinrichtung erkannt wird, daß sich der Fahrer dem Ende des augenblicklich befahrenen Pfeiles nähert. Dadurch sind die bereits vorhandenen Informationen der Ortungsvorrichtung ausnutzbar. Um einen definierten Beginn der Fahrt für das System vorzugeben, ist es zweckmäßig, wenn die Ortungsvorrichtung mittels einer Tastvorrichtung auf einen Startpunkt gesetzt wird (Initialisierung). Als Startpunkt eignet sich insbesondere ein Knotenbereich. Da an einem bestimmten Knoten nur eine feste Anzahl von Nachfolgern möglich ist, kann dadurch auf einfache Art und Weise nach Abschluß der Knotenortung eine Linienortung durchgeführt werden. Vorteilhaft ist es, wenn sich Linienortung und Knotenortung abwechseln, so daß beim Erreichen des Pfeilendes einer Linienortung auf eine Knotenortung umgeschaltet wird. Sowohl bei der Linienals auch bei der Knotenortung erfolgt die Ortung am einfachsten durch die Addition von durch die Meßvorrichtung ermittelten Wegeelementen. Diese Wegeelemente sind nach Betrag und Richtung definiert. Zweckmäßig ist es, die Ortungsdaten und die Zieldaten bei einer Fahrtunterbrechung zwischenzuspeichern. Dadurch ist bei einem Aufenthalt des Fahrzeuges eine neue Eingabe des Zieles oder des Startpunktes nicht notwendig. Zweckmäßig ist es auch, die Ortungs- und Navigationseinrichtung zur Korrektur von Fahrzeugparametern (Spurweite, Radumfang, gegebenenfalls rechts und links) heranzuziehen. In Abhängigkeit von der Abweichung der gemessenen Daten und der Netzdaten sind auf diese Art und Weise Fahrzeugparameter, insbesondere der Radumfang, die Spurweite und die Drift feststellbar. Durch diese Maßnahme ist es ebenso möglich, bei starken Abweichungen dieser Größen vom vorher eingestellten Wert auf eventuelle Fehler im Fahrzeug zu schließen.

Zeichnung

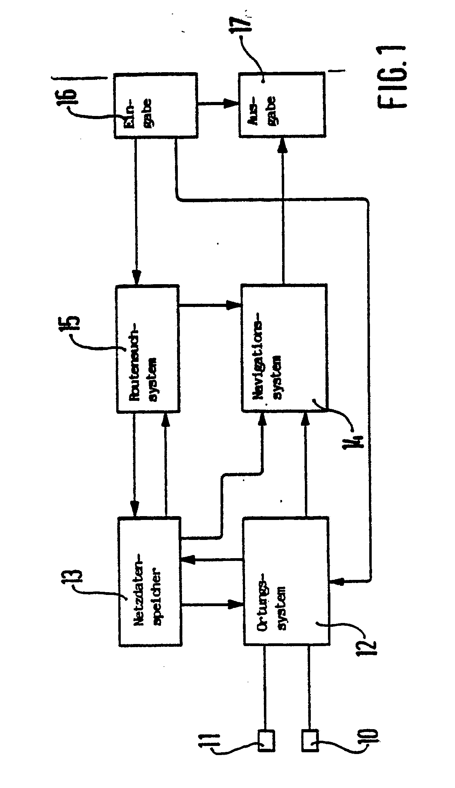

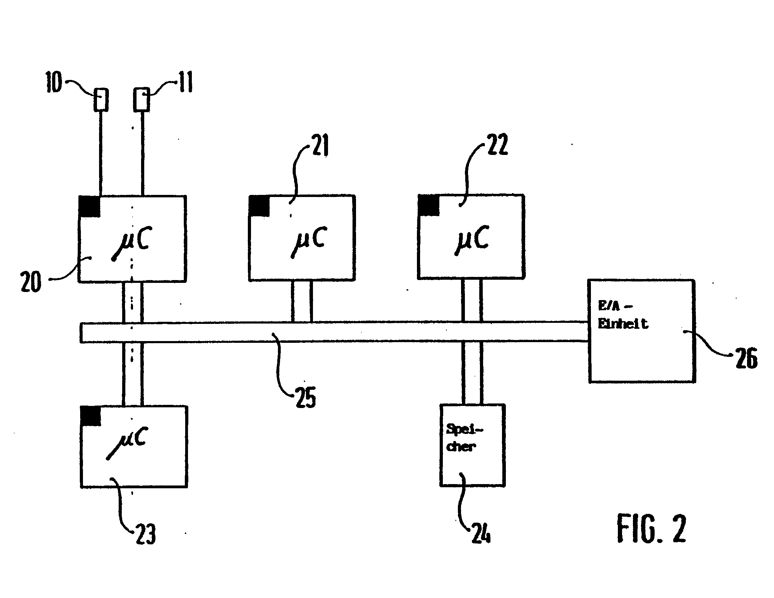

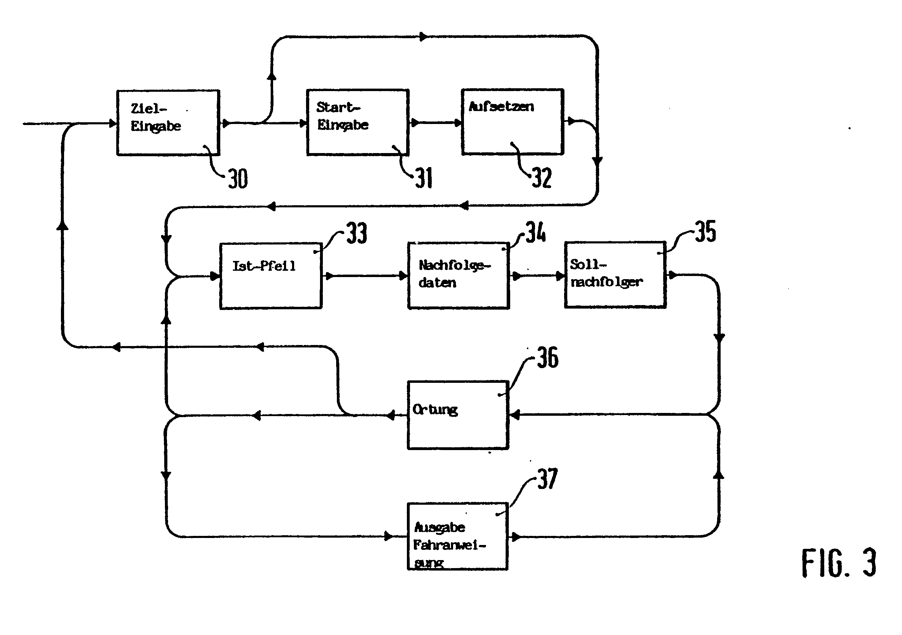

Ein Ausführungsbeispiel der Erfindung ist in der Zeichnung dargestellt und in der nachfolgenden Beschreibung näher erläutert. Es zeigen Figur 1 schematisch den Aufbau des Ortungs- und Navigationsgerätes, Figur 2 ein praktisches Ausführungsbeispiel für den Aufbau des Ortungs- und Navigationsgerätes und die Figuren 3 bis 6 Flußdiagramme zur näheren Erläuterung der Funktionsweise der Mikroprozessoren des Ortungs- und Navigationsgerätes nach Figur 2.

Beschreibung des Ausführungsbeispiels

Das erfindungsgemäße Ortungs- und Navigationssystem ist insbesondere für Landfahrzeuge gedacht und in seinem Prinzip in der NTZ, Band 36 (1983) Heft 4, Seiten 214 bis Seite 223 näher beschrieben. In den dort aufgeführten Artikeln sind insbesondere die Grundlagen der Fahrzeugortung, der Netzabbildung, der Routensuche und der Stützung auf die Netzbildung beschrieben, so daß auf diese Teile in der Beschreibung nicht näher eingegangen wird.

Figur 1 zeigt den Grundaufbau des erfindungsgemäßen Ortungs- und Navigationssystems, das für Landfahrzeuge gedacht ist. An einer nicht dargestellten Fahrzeugachse eines Fahrzeuges sind zwei Geber 10 und 11 angebracht. Diese Geber nehmen die Drehzahlsignale eines jeden Rades der Achse auf. Die Gebersignale der Geber 10 und 11 werden einem Ortungssystem 12 zugeführt. An das Ortungssystem angeschlossen ist ein Netzdatenspeicher 13. Des weiteren steht das Ortungssystem 12 mit einem Navigationssystem 14 in Verbindung. Das Navigationssystem 14 ist mit einem Routensuchsystem 15 verbunden, das ebenfalls Zugriff zum Netzdatenspeicher 13 hat. Eine Dateneingabevorrichtung 16 wirkt sowohl auf das Routensuchsystem 15 als auch auf das Ortungssystem 12 ein.

Des weiteren steht die Eingabevorrichtung 16 mit der Ausgabevorrichtung 17 in Verbindung. Die Ausgabevorrichtung 17 wird des weiteren vom Navigationssystem 14 angesteuert. Die Ausgabevorrichtung 17 kann sowohl eine akustische als auch eine optische Ausgabevorrichtung oder eine Kombination von beiden sein. Durch die optische Ausgabevorrichtung ist beispielsweise der Ort des Fahrzeuges in einer Kreuzung darstellbar, während durch eine akustische Signalabgabe dem Fahrer Anweisungen zu erteilen sind.

Durch die Eingabevorrichtung 16 ist die Start- und Zielinformation eingebbar. Die Startinformation wird dabei zum Ortungssystem 12, die Zielinformation zum Routensuchsystem 15 gegeben. Des weiteren wird durch die Eingabevorrichtung 16 ein Aufsetzssignal bei Einfahrt in den Bereich eines Knotens abgegeben. Dies wird vom Fahrzeugführer bei der Initialisierung von Hand ausgelöst. Der Vorgang muß bei Einfahrt in das Operationsgebiet oder bei Ortungsverlust durchgeführt werden. Dieses Signal wird dem Ortungssystem 12 zugeführt. Die Meßsignale der Geber 10 und 11 werden vom Ortungssystem ausgewertet, wobei die Impulssumme ein Maß für den zurückgelegten Weg und die Impulsdifferenz ein Maß für die Richtungsänderung des Fahrzeuges ist. Die so gewonnenen Signale werden in Intervallen addiert und mit einem Pfeildatensatz verglichen, der vom Netzdatenspeicher 13 in das Ortungssystem abgegeben wird. Die Intervalle sind dadurch gekennzeichnet, daß die Impulssumme oder -differenz einen programmierbaren Schwellwert überschreiten. Beim Aufsetzen ruft das Ortungssystem die Information ab, die ihm durch die Starteingabe vorgegeben wird. Später werden die vom Netzdatenspeicher 13 zum Ortungssystem 12 übertragenen Informationen durch das Erkennen des Nachfolgers bestimmt. Das Ortungssystem 12 ruft vom Netzdatenspeicher 13 alle Nachfolger des Pfeils ab, der gerade bearbeitet wird. Das Routensuchsystem kann eine Grob- oder Feinstruktur abrufen, je nachdem, wie weit der Fahrer von seinem Ziel entfernt ist. Aufgrund der in dem NTZ-Artikel beschriebenen Systematik sucht das Routensuchsystem aus den vom Netzdatenspeicher eingelesenen Nachfolgern die Richtung aus, die am schnellsten zu dem gewünschten Ziel führt. Aus diesem Grunde gelangt die Zielinformation aus der Eingabe 16 direkt in das Routensuchsystem.

Das Routensuchsystem 15 überträgt nun diesen Nachfolger in das Navigationssystem 14, durch das die Anzeigeinformation aufgebaut wird. Die Anzeigeinformationen können dabei ebenfalls aus dem Netzdatenspeicher 13 gewonnen werden, so daß bei einer optischen Anzeige der Kreuzungsbereich so aufbaubar ist, wie er sich dem Fahrer beim Annähern an die Kreuzung darstellt. Kurz vor Erreichen der Kreuzung, was durch das Ortungssystem 12 festgestellt wird, wird die Fahrinformation an die Ausgabeeinrichtung 17 übertragen. Diese Anweisung erhält das Navigationssystem 14 vom Ortungssystem 12.

Der Aufbau der in Figur 1 gezeigten Systeme und ihre Verknüpfung untereinander geschieht am einfachsten mittels Mikroprozessoren, wie dies in Figur 2 dargestellt ist. Die Geber 10 und 11 sind an jeweils einen Eingang eines Mikrocomputers 20 angeschlossen, der das Programm für die Impulsauswertung enthält. Das Ortungsprogramm wird vom Mikrocomputer 21 ausgeführt. Der Mikrocomputer 22 enthält das Programm für das Navigationssystem und der Mikrocomputer 23 das Programm für das Routensuchsystem. Die Mikrocomputer sind alle miteinander über einen parallelen Datenbus 25 gekoppelt. Weiterhin ist ein Speicher 24 vorgesehen, der ebenfalls parallel an die Mikrocomputer angeschlossen ist. Der Netzdatenspeicher 24 kann ebenfalls die Programme für die einzelnen Mikrocomputer 20, 21, 22 und 23 enthalten. Ebenso ist es jedoch auch möglich, den Mikrocomputer 20 als Einchipcomputer auszubilden, der selbst bereits einen Speicher beinhaltet. Ein solcher Speicher besteht aus einem festprogrammierbaren Teil, der die Programme beinhaltet, sowie einem variablen Teil, in dem Daten kurzfristig abgelegt sind. An den Datenbus 25 ist des weiteren ein Bedienteil 26 angeschlossen, das die Ein- und Ausgabeeinheit beinhaltet. Die Eingabeeinheit besteht hierbei aus einer geeigneten Tastatur, während die Ausgabeeinheit aus einem Lautsprecher oder einer Anzeigevorrichtung besteht. Es ist darum möglich, sowohl eine sprachliche als auch eine optische Ausgabe vorzusehen. Einer der Mikrocomputer 21, 22 und 23 übernimmt des weiteren die zentrale Steuerung der übrigen Mikrocomputer.

Die Funktion und die Arbeitsweise der Mikroprozessoren 20, 21, 22 und 23 soll anhand der Struktogramme (Figur 3 bis 6) näher erläutert werden. Das in Figur 3 dargestellte Strukogramm zeigt den Ablauf der gesamten Zielführung.

Im ersten Schritt 30 wird dem System das Ziel in Form der Zielpfeilidentifikation eingegeben. Ist dem System der Startpunkt bereits bekannt, wird sofort mit Schritt 33 fortgefahren, andernfalls erfolgt vorher mit Schritt 31 die Eingabe der Startpfeilidentifikation und mit Schritt 32 das genaue Aufsetzen der Ortung auf den Startpunkt. Der Startpfeil ist jetzt der Istpfeil auf dem vorerst die Ortung durchgeführt wird. In Schritt 33 wird die Istpfeilidentifikation dem Netzdatenspeicher, der Ortung und der Routensuche übergeben. Der Netzdatenspeicher stellt daraufhin die Daten der zum Istpfeil gehörenden Nachfolgepfeile zusammen und übergibt sie der Ortung (Schritt 34) und die Routensuche übergibt im Schritt 35 der Navigation die Identifikation desjenigen der hier möglichen Nachfolger, der am günstigsten zur Erreichung des Ziels weiterführt. Jetzt werden von der Ortung solange die laufend anfallenden Radimpulse verarbeitet und die sich daraus ergebenden Positionen bestimmt (Schritt 36), bis einer der drei folgenden Fälle eintritt:

- die Ortung hat erkannt, daß der in den Netzdaten festgelegte optimale Punkt zur Ausgabe der für die nächste Kreuzung gültigen Einordnungs- bzw. Abbiegeanweisung erreicht wurde. Die Navigation gibt daraufhin die hier nötigen Anweisungen aus (Schritt 37). Anschließend wird mit Schritt 36 weiterhin die Position bestimmt.
- Die Ortung hat erkannt, daß das Fahrzeug einen der möglichen Nachfolgepfeile erreicht hat und sich damit die Istpfeilidentifikation geändert hat. Das System fährt mit Schritt 33 fort; der Netzdatenspeicher erhält die neue Istpfeilidentifikation und liefert der Ortung die Nachfolgerdaten des neuen Istpfeils. Die Navigation erhält die Werte für den neuen Sollnachfolger.
- Die Fahrt wird durch den Fahrer am Bedienteil unterbrochen. Das System wartet auf Eingabe eines neuen Ziels (Schritt 30).

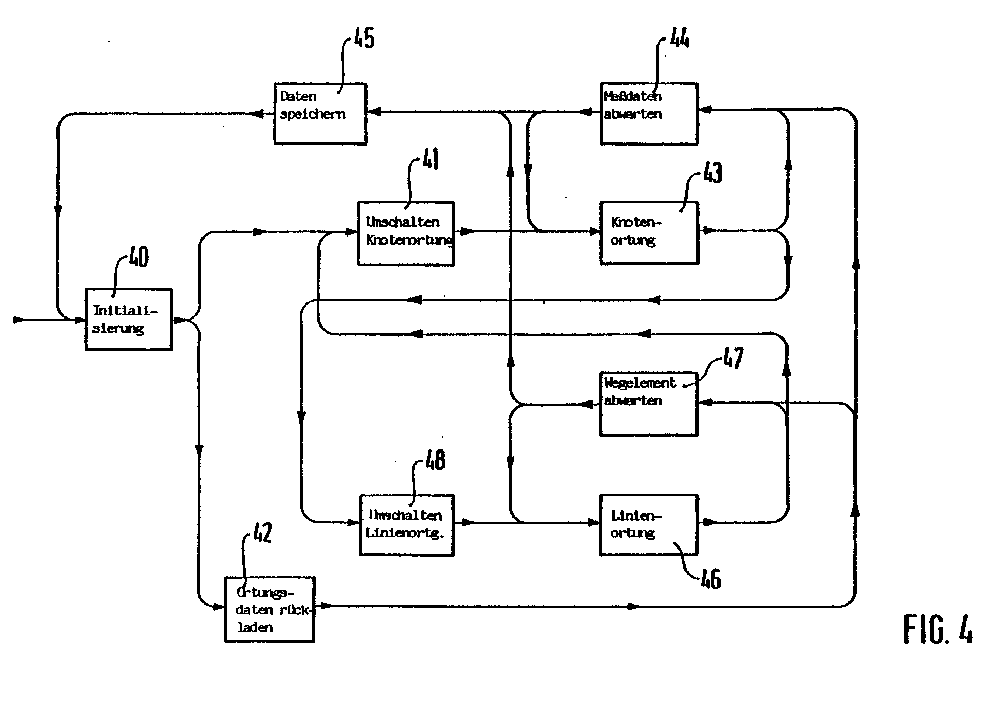

Die Ortung hat innerhalb des gesamten Systems die Aufgabe, nach jedem Messintervall die Position des Fahrzeugs zu bestimmen, die sich aus den angefallenen Radimpulsen ergibt, sowie zu entscheiden, auf welchem Pfeil des Straßennetzes es sich befindet und ob eine Änderung des Ist-Pfeiles stattgefunden hat. Das Ortungsverfahren wird in Figur 4 erläutert.

In der Initialisierung (Schritt 40) wird der Ortung die augenblickliche Fahrzeugposition mitgeteilt, die entweder durch den Aufsetzvorgang als Endpunkt des Startpfeils festgelegt ist oder bei der Unterbrechung der letzten Fahrt in einem nichtflüchtigen Speicher festgehalten worden war. Im ersten Fall (neu Aufsetzen) wird der Ortungsmodus jetzt auf Knotenortung umgeschaltet (Schritt 41) und in der Knotenordnung die Position des Fahrzeugs innerhalb des Kreuzungsbereichs berechnet und geprüft, ob und welcher der vom Kreuzungsbereich abgehenden Pfeile befahren wird (Schritt 43). Das Verfahren dieser Entscheidung wird weiter unten erläutert. Wurde in der Knotenortung nicht das Befahren eines der an der untersuchten Kreuzung möglichen Nachfolger erkannt, so verbleibt die Ortung im Knotenortungsmodus und wartet im Schritt 44 auf die nächsten Meßdaten, mit denen dann wiederum Knotenortung durchgeführt wird. Diese Schleife wird solange durchlaufen, bis ein Nachfolgepfeil erkannt wird. Jetzt wird der ortungsmodus auf Linienortung umgeschaltet (Schritt 48). Das Fahrzeug befindet sich auf einem Pfeil, auf dem es sich vor oder rückwärts bewegen kann. Es genügt zur Bestimmung der Fahrzeugposition auf dem Pfeil eine reine Längenmessung. Alle anfallenden Radimpulse werden jetzt solange im Linienortungsmodus verarbeitet, bis das Verlassen des Pfeils und die Einfahrt in einen Kreuzungsbereich erkannt wird (Schritt 46 und 47). Das Verlassen eines Pfeiles an seinem End- bzw. Anfangsknoten ist durch Über- bzw. Unterlaufen des Pfeillängenzählers gekennzeichnet. Beim Einfahren in einen Kreuzungsbereich wird wieder auf Knotenortung umgeschaltet (Schritt 41) usw.. Sowohl in der Knotenortungsschleife (Schritt 43, 44) als auch in der Linienortungsschleife (Schritt 46, 47) kann der Ortungalgorithmus unterbrochen werden. Alle ortungsrelevanten Daten werden dann nichtflüchtig gespeichert (Schritt 45) und können vor einer Fortsetzung der Fahrt wieder eingelesen werden (Schritt 42). In diesem Fall wird der Ortungsalgorithmus an der Stelle des Ablaufdiagramms fortgesetzt, an der er vorher unterbrochen war.

In den zuvor genannten Struktogrammen wurde jeweils darauf hingewiesen, daß eine Linien- oder Knotenortung vorgenommen wird. Die Linienortung, bei der sich das Fahrzeug im wesentlichen auf einer vorgegebenen Strecke bewegt, weist keine besonderen Schwierigkeiten auf˙ Der vom Netzdatenspeicher geladene Pfeil ist durch seine Länge, den Abgangswinkel und den Auftreffwinkel bestimmt. Während der Fahrt werden nun durch die Weggeber Wegelemente nach Betrag und Richtung aufaddiert und mit der gespeicherten Teilinformation verglichen. Einzelheiten des Verfahrens sind dem bereits erwähnten Artikel in der NTZ zu entnehmen.

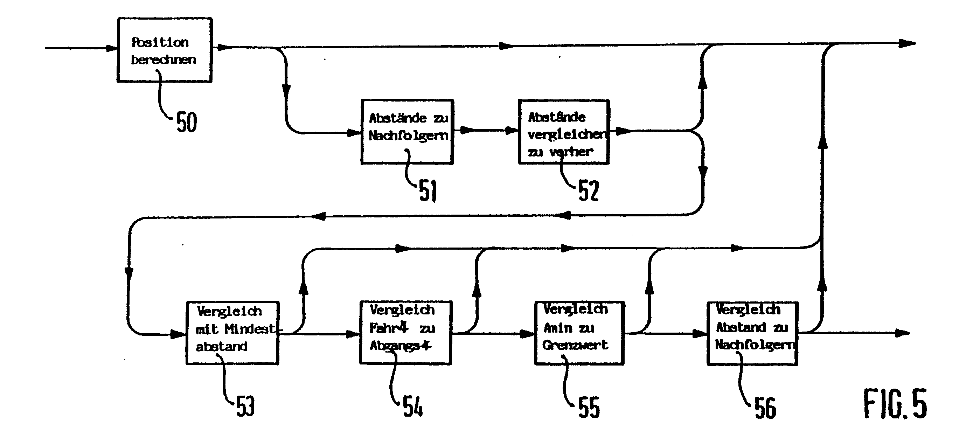

Bedeutend komplexer ist die Knotenortung, mittels der es möglich sein muß, im Kreuzungsbereich den eingeschlagenen Weg zu ermitteln. Dies bedeutet bei Kreuzungen ebenfalls nur geringe Schwierigkeiten. Eine Möglichkeit der Ortung im Kreuzungsbereich ist durch die Grenzgeradenmethode gegeben, die in dem bereits erwähnten Artikel in der NTZ beschrieben worden ist. Als besser hat sich jedoch die Knotenortung nach dem Abstandsverfahren erwiesen, die anhand des Struktogrammes in Figur 5 näher erläutert sein soll.

Beim Abstandsverfahren werden die Abstände der Fahrzeugpositionen zu den Fußpunkten aller Nachfolger bestimmt. Es wird festgestellt, ob einer dieser Abstände ein relatives Minimum durchlaufen hat, d.h. der entsprechende Abstand vor Berücksichtigung des letzten Wegelements kleiner gewesen ist und davor fallende Tendenz hatte. Ist für diesen Nachfolger die Differenz des Fahrtwinkels zu seinen Abgangswinkel kleiner als ein programmierbarer Grenzwert und dieser Abstand zugleich kleiner als die Abstände zu allen übrigen Fußpunkten, so gilt der dazugehörige Nachfolger als erreicht. Dieser wird als Ist-Pfeil übernommen.

Beim Grenzgeradenverfahren wird der Kreuzungsbereich durch ein Polygon begrenzt, das sich aus den Geraden ergibt, die durch jeweils einen der Fußpunkte aller Nachfolger verlaufen und senkrecht auf dem dazugehörigen Abgangswinkel stehen. Derjenige Nachfolger gilt als erreicht, dessen Grenzgerade das Fahrzeug zuerst überquert, ohne daß die Differenz zwischen Fahrtwinkel und Abgangswinkel einen programmierbaren Grenzwert überschreitet.

Das Struktogramm nach Figur 5 beschreibt den Programmablauf für die Knotenortung nach dem Abstandsverfahren. An der Stelle 50 wird in bekannter Weise durch die Addition von Wegelementen die augenblickliche Position im Knoten berechnet. Fährt das Fahrzeug rückwärts, so kann ein Nachfolger nicht gefunden werden. Dieser Programmteil wird daher wieder verlassen, ohne daß ein Nachfolger gefunden wurde. Führt das Fahrzeug eine Vorwärtsfahrt durch, so werden die Abstände zu allen möglichen Nachfolgern an der Stelle 51 berechnet. Diese Abstände zu allen möglichen Nachfolgern werden mit den letzten Abständen im Schritt 52 verglichen. Ist bezüglich dieser letzten Abstände ein relatives Minimum nicht vorhanden, so ist ein Verlassen des Knotens nicht zu erwarten. Die Programmschleife nach Figur 5 wird wieder verlassen. Es wird fortgefahren mit Schritt 44 in Figur 4.

Konnte ein relatives Minimum bezüglich einer der letzten Abstände ermittelt werden; so wird zur Stelle 53 gegangen, wo dieser minimale Abstand mit allen weiteren Abständen verglichen wird. Ist der gefunde relative minimale Abstand nicht auch der kleinste aller Abstände, d.h. liegt nicht auch bezüglich aller weiteren Nachfolger ein absolutes Minimum vor, kann noch nicht entschieden werden, ob vom Fahrer des Fahrzeugs eine bestimmte Straße gewählt worden ist. Der Programmteil wird daher wieder verlassen und auf ein neues Wegelement gewartet. Wurde dagegen an der Stelle 53 ein absolutes Minimum erkannt, wird der Fahrtwinkel mit dem Abgangswinkel des erkannten Nachfolgers verglichen und festgestellt, ob die Winkeldifferenz einem bestimmten Wert nicht überschreitet.

Ist die Winkeldifferenz nicht zu groß, wird der nimimale Abstandwert mit einem Abstandsgrenzwert verglichen. Hier muß die Bedingung erfüllt sein, daß der Abstandsgrenzwert, bei der Messung nicht überschritten wird. Ist dies der Fall, so liegt eine eindeutige Ortung nicht vor, so daß der Nachfolger als nicht gefunden anzusehen ist. Schlußendlich muß noch geprüft werden, wie sich der Abstand zu allen anderen Nachfolgern entwickelt. Soll ein Nachfolger als gefunden angesehen werden, darf keine Annäherung an andere Nachfolger mehr erfolgen. Sind alle Bedingungen erfüllt, so ist ein Nachfolger gefunden worden und die Knotenortungsschleife mit den Stellen 43 und 44 des Flußdiagramms nach Figur 4 kann verlassen werden. An der Stelle 48 wird dann auf Linienortung umgeschaltet. Der weitere Verlauf der Ortung erfolgt, wie dies anhand des Strukturdiagrammes in Figur 4 beschrieben worden ist.

An früheren Stellen wurde schon erwähnt, daß aufgrund der Netzplanstützung zwischen der gemessenen Länge und dem gemessenen Winkel und der gespeicherten Länge und dem gespeicherten Winkel Differenzen auftreten können. Ursache für diese Abweichungen sind Fehlmessungen, die aufgrund unterschiedlicher Radstände, unterschiedlichen Reifendruckes unterschiedlichen Umfangs des rechten und linken Reifens, und unterschiedlicher Beladung der Fahrzeuge entstehen oder aber bei einem Blockieren der Räder bei einem Bremsvorgang auftreten.

Bei der netzplangestützten Ortung erfolgt beim Umschalten des Ortungsmodus von Knoten- und Linienortung bzw. von Linien- auf Knotenortung regelmäßig dadurch eine Korrektur der Fahrzeugposition, daß die errechnete Position durch eine in der Netzabbildung gespeicherte Position ersetzt wird. Neben den bereits geschilderten Ursachen kann der Unterschied zwischen der errechneten und der gespeicherten Position noch eine weitere Ursache haben. Das Fahrzeug befindet sich beim Befahren bzw. Verlassen eines Kennungsbereichs nicht immer exakt auf der im Stadtplan gespeicherten Position, da es einerseits an jeder beliebigen Stelle der Straßenbreite in diese hinein- bzw. aus dieser herausfahren kann, andererseits dort auch einen Fahrtwinkel haben kann, der von den gespeicherten Auftreff- und Abgangswinkeln abweicht.

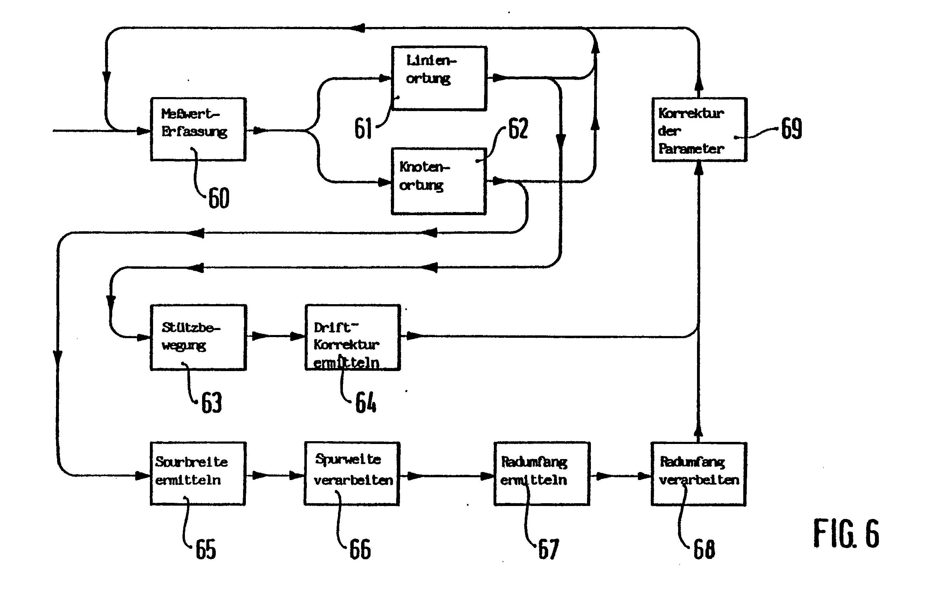

Die hierdurch verursachten Fehler müßten jedoch bei langfristiger statischer Mittelung verschwinden. Ist dies nicht der Fall, so läßt sich aus dem bei der Fahrt anfallenden Fehlern auf eine Abweichung den bei der Ortungsberechnung zugrundegelegten Fahrzeugparametern von den tatsächlichen Werten derselbe schließen und eine Korrektur der Fahrzeugparameter durchführen. Der Weg dazu ist anhand des in Figur 6 dargestellten Struktogrammes näher erläutert.

An der Stelle 60 werden die Meßwerte beispielsweise durch Weggeber erfaßt. Befindet das das System im Bereich der Linienortung, so wird zur Stelle 61 gesprungen und die Linienortung in bekannter Weise durchgeführt. Ist ein Pfeilende nicht erreicht, wird der neue Meßwert an der Stelle 60 erfaßt. Wird das Pfeilende erreicht, wird an der Stelle 63 aus der jetzt anfallenden Stützungsbewegung die Driftkorrektur ermittelt. Die Driftkorrektur wird am Ende eines jeden Pfeiles aus der Differenz des Auftreffwinkels dieses Pfeiles und dem durch Kopplung gewonnen Fahrzeugwinkel ermittelt. Der Driftkorrekturwert wird gespeichert und statisch weiterverarbeitet, indem langfristige Abweichungen an der Stelle 64 erfaßt und erkannt werden. An der Stelle 69 werden die Erkenntnisse verarbeitet und der Driftkorrekturwert aktualisiert.

Befindet sich das Fahrzeug im Knotenbereich, so wird an der Stelle 62 in bekannter Weise die Knotenortung durchgeführt. Ist ein Nachfolger nicht gefunden, wird die Schleife zur Meßwerterfassung 60 durchlaufen und die Knotenortung weiter durchgeführt. Ist ein Nachfolger gefunden, gelangt man zur Stelle 65, aus der aus der Netzplanstützung langfristig die Spurbreite berechnet wird. Die Spurbreite wird beim Erkennen eines Nachfolgers aus der Winkeldifferenz zwischen Abgangswinkel des erkannten Nachfolgers und dem durch Koppelnavigation gewonnenen Fahrzeugwinkel ermittelt. Die Spurbreite wird an der Stelle 66 statistisch langfristig geprüft, wobei bei einer langfristigen Abweichung an der Stelle 69 die Parameter korrigiert werden.

An der Stelle 67 wird aus der Stüzung ebenfalls der Radumfang ermittelt. Der Radumfang wird bei jedem Erkennen eines Nachfolgers aus der Länge und der Richtung der Stützungsbewegung ermittelt, die dann erforderlich ist, wenn der gemessene Ortungspunkt und der aufgrund der Netzplandaten vorgegebene Ortungspunkt nicht übereinstimmen. Treten langfristig Differenzen auf, so wird auf einen geänderten Radumfang geschlossen. An der Stelle 68 werden die Stützbewegungen langfristig ausgewertet, wobei bei einer bleibenden Abweichung eine Korrektur des Radumfanges an der Stelle 69 erfolgt.

Insgesamt ermöglicht die Erfindung ein Fehlerkorrekturverfahren bei einer gestützten Koppelnavigation, wobei die Fahrzeugortung in zwei sich zyklisch wiederholenden Phasen abläuft.

Die eine Phase ist die Linienortung durch Messung des zurückgelegten Weges vom Pfeilfußpunkt aus, um das Erreichen der Pfeilspitze zu erkennen. Die Pfeilspitze gilt als erreicht, wenn der zurückgelegte Weg gleich der gespeicherten Pfeillänge ist und vorher kein Abbiege- oder Wendemanöver auf dem Pfeil erkannt wurde.

Die andere Phase ist die Knotenortung durch Koppelnavigation im Kreuzungsbereich zur Ermittlung des erreichten Nachfolgers und zur Korrektur von Weg- und Winkelfehlern nach dem Knotenortungsverfahren.

Ein entscheidender Gesichtspunkt der Erfindung ist der Ablauf des Ortungsprozesses in sieben Schritten, die nachfolgend erläutert werden.

1. Schritt: Ortungssystem initialisieren.

Die schon erwähnte Startpfeil-Identifikation wird in den Speicher für den Ist-Pfeil geladen. Das Ortungssystem 12 erhält vom Netzdatenspeicher 13 die Identifikation der Nachfolger des Startpfeils und ihre Attribute (das sind numerische Zusatzinformationen, mit denen zusammen das Pfeilnetz eine vollständige Abbildung eines Straßennetzes bildet; die Attribute können jedem Pfeil, der durch eine Pfeilnummer eindeutig gekennzeichnet ist, als sogenannter Pfeildescriptor zugeordnet werden).

Die Speicher für das letzte Wegelement und für den Längenüberschuß, eine weiter unten bei Schritt 6. beschriebene Korrekturgröße, werden zu Null gesetzt. Es geht weiter, wenn das Erreichen der Pfeilspitze signalisiert wird.

2. Schritt: Umschalten auf knotenortung.

Der Speicher für die Fahrzeugposition wird mit den Koordinaten der Spitze des Ist-Pfeils, und der Speicher für den Fahrtwinkel mit dem Auftreffwinkel des Ist-Pfeils geladen. Zum Inhalt des Speichers für die Fahrzeugposition wird ein Korrekturvektor addiert, dessen Länge dem des Längenüberschusses entspricht und dessen Richtung dem gespeicherten Winkel am Endknoten entspricht.

3. Schritt: Knotenortung.

Das sich ergebende gerichtete Kreisbogenelement wird berechnet und mit dem letzten Fahrtwinkel zur letzten Fahrzeugposition addiert. Als Ergebnis ergeben sich die aktuellen Werte für die Fahrzeugposition und für den Fahrtwinkel.

a) Ist die Länge des Wegelementes negativ (Rückwärtsfahrt) geht es weiter mit Schritt 4.

b) Nach einem knotenortungsverfahren wird geprüft, ob einer der Nachfolger des aktuellen Ist-Pfeils erreicht wurde. Ist ein Nachfolger erkannt worden, geht es weiter mit Schritt 5.; andernfalls folgt Schritt 4.

4. Schritt: Warten auf das nächste Wegelement.

Danach wird fortgefahren mit Schritt 3.

5. Schritt: Umschalten auf Linienortung.

Der Speicher für die Istpfeil-Identifikation wird mit der Identifikation des in Schritt 3. erkannten Nachfolgers geladen. Die Istpfeil-Identifikation wird zum Routensuchsystem und zum Navigationssystem übertragen. Gleichzeitig wird der Netzdatenspeicher entsprechend addressiert, der daraufhin die Nachfolgerdatensätze liefert. Der Pfeillängen-Zähler wird zu Null gesetzt.

6. Schritt: Linienortung.

Zum pfeillängen-Zähler wird die Länge des letzten Wegelementes unter Berücksichtigung des Vorzeichens addiert.

Überschreitet der Inhalt des Pfeillängenzählers eine der in den Pfeilattributen enthaltenen Ausgabedistanzen, so veranlaßt das Ortungssystem den Navigationsprozessor, die entsprechende Fahranweisung an das Bedienteil zu übertragen und auszugeben.

Überschreitet der Inhalt des Pfeillängenzählers die Länge des Istpfeiles, so wird die Differenz beider Größen als Längenüberschuß gespeichert, und es wird mit Schritt 2. fortgefahren.

Wird der Inhalt des Pfeillängenzählers negativ, so wird sein Inhalt positiv als Längenüberschuß gespeichert, die Identifikation des Istpfeiles durch die seines Gegenpfeils ersetzt, und es wird mit Schritt 2. fortgefahren.

7. Schritt: Warten auf nächstes Wegelement.

Im Anschluß daran geht es weiter mit Schritt 6.

Während der Schritte 4. und 7. kann der Ortungsprozess unterbrochen werden, und alle für die Ortung relevanten Daten können in einen nichtflüchtigen Speicher abgelegt werden (etwa zum Parken). Falls das Fahrzeug seine Position nicht geändert hat, kann anschließend der Ortungsprozess ohne Neuinitialisierung dort fortgesetzt werden.

Voranstehend wurde mehrfach das Knotenortungsverfahren zum Erkennen des jeweiligen Nachfolgers im Kreuzungsbereich erwähnt. Hier können das a) Abstandsverfahren und das b) Grenzgeradenverfahren verwendet werden.

Beim Abstandsverfahren werden die Abstände der Fahrzeugposition zu den Fußpunkten derjenigen Nachfolger bestimmt, für welche die Differenz des Fahrtwinkels zu deren Abgangswinkel kleiner als ein programmierbarer Grenzwert ist. Es wird festgestellt, ob einer dieser Abstände ein relatives Minimum durchlaufen hat, d.h. der entsprechende Abstand vor Berücksichtigung des letzten Wegelementes kleiner gewesen ist, und davor fallende Tendenz hatte. Ist dieser Abstand zugleich kleiner als die Abstände zu allen übrigen Fußpunkten, so gilt der dazugehörende Nachfolger als erreicht. Dieser wird als Istpfeil übernommen.

Beim Grenzgeradenverfahren wird der Kreuzungsbereich durch ein Polygon begrenzt, das sich aus den Geraden ergibt, die durch jeweils einen der Fußpunkte aller Nachfolger verlaufen und senkrecht auf dem dazugehörigen Abgangswinkel stehen. Derjenige Nachfolger gilt als erreicht, dessen Grenzgerade das Fahrzeug zuerst überquert, ohne daß die Differenz zwischen Fahrtwinkel und Abgangswinkel einen programmierbaren Grenzwert überschreitet.

Von Interesse ist gegebenenfalls noch die Behandlung sogenannter Sondermanöver. Befindet sich das Ortungssystem im Modus "Linienortung", wird lediglich die Länge der Wegelemente ausgewertet, da vorausgesetzt ist, daß das Fahrzeug sich auf dem entsprechenden Straßenstück mit gleichbleibender Fahrtrichtung bewegt.

Ist diese Voraussetzung aber nicht erfüllt, kann dies zu einem Ortungsverlust führen, was nachfolgend anhand von zwei Fällen beispielhaft verdeutlicht wird:

a) das Fahrzeug wendet auf dem Pfeil (nicht im Knotenbereich) und setzt die Fahrt auf dem Gegenpfeil fort;

b) das Fahrzeug biegt von einem Pfeil auf einen nicht im Netz erfaßten Weg (z.B. eine private Garageneinfahrt) ab und kehrt an derselben Stelle wieder in das Netz zurück.

Zur Lösung dieser bei Sondermanövern auftretenden Probleme wird nun vorgeschlagen, das gesamte Netz in annähernd gerade Pfeile aufzulösen, so daß bei normalem Befahren eines Pfeiles der Fahrtwinkel etwa dem Abgangs- bzw. Auftreffwinkel dieses Pfeils entspricht.

Ferner ist vorgesehen, daß parallel zur Linienortung ständig mit einer Koppelnavigation geprüft wird, ob das Fahrzeug eines der genannten Sondermanöver durchführt. Dieses läßt sich dadurch ermitteln, daß der Fahrtwinkel eine über die normale Drift hinausgehende Abweichung vom Winkel des aktuellen Pfeils besitzt.

Ist ein Sondermanöver erkannt worden, schaltet das Ortungssystem auf Knotenortung um und führt in einem künstlichen Knotenbereich ein. Dieser künstliche Knoten wird so gelegt, daß er den aktuellen Pfeil und seinen Gegenpfeil in je zwei Pfeilstücke teilt. Als Nachfolger werden das Reststück des aktuellen Pfeils sowie das Gegenstück zum bereits befahrenen Stück des aktuellen Pfeils deklariert.

Im Rahmen der Knotenortung wird außerdem bei einem Wendemanöver auf diesen künstlichen Gegenpfeil aufgesetzt.

Darüber hinaus wird im Rahmen der Knotenortung das Ortungssystem beim Verlassen des Pfeils so lange im Knotenortungsmodus gehalten, bis das Fahrzeug aus dem nicht digitalisierten Gebiet zurückkehrt und der gewählte Nachfolger identiziert ist.

Berücksichtigter Stand der Technik:
NTZ, Bd. 36,1983, Seiten 214 - 223
Der GMD-Spiegel 2/79, Aufsatz "Automatische Positionsbestimmung von Fahrzeugen mit Koppelnavigation und digitalem Stadtplan"
DE-OS 29 25 656

## Patentansprüche

1. Verfahren zur Ortung von Landfahrzeugen unter Verwendung einer gestützten Koppelnavigation, mit einer Knotenortung, bei der alle Meßwerte der Fahrzeugbewegung nach Betrag und Richtung in einem Pfeillängenzähler addiert werden und mit den Attributen aus dem Pfeildatensatz verglichen werden, und mit einer Linienortung, bei der alle Meßwerte der Fahrzeugbewegung nach dem Betrag addiert werden und mit den entsprechenden Attributen aus dem Pfeildatensatz verglichen werden, dadurch gekennzeichnet, daß die Ortung in zwei sich zyklisch wiederholenden Phasen vorgenommen wird, von denen die eine Phase die Linienortung und die andere Phase die Knotenortung ist, mit den nachfolgenden Schritten:

1. das Ortungssystem wird installiert,
2. es wird auf eine Knotenortung umgeschaltet,
3. es wird eine Knotenortung durchgeführt,
4. es wird auf ein nächstes Wegelement gewartet, danach wird mit der Knotenortung fortgefahren,
5. die Abstände der Fahrzeugposition zu den Fußpunkten der jeweiligen Nachfolger wird bestimmt und der Nachfolger wird erkannt, zu dessen Fußpunkt ein relatives Minimum gegeben ist und dieses relative Minimum zugleich das absolute Minimum bezüglich aller Nachfolger ist,
6. mit Erkennen des absoluten Minimums des Abstandes zur Position der Pfeilfußpunkte wird die Knotenortung abgeschlossen und automatisch die Ortung auf die Koordinaten des Fußpunktes des erkannten Nachfolgepfeiles aufgesetzt,
7. es wird eine Linienortung durchgeführt,
8. es wird auf ein nächstes Wegelement gewartet, danach wird eine Linienortung gemäß 7. durchgeführt,
9. nach Erreichen des Pfeilendes wird auf eine Knotenortung umgeschaltet.

2. Verfahren nach Anspruch 1, dadurch gekennzeichnet, daß in die Ortungseinrichtung (12) nach jedem Knoten der nachfolgende Pfeildatensatz geladen wird.

3. Verfahren nach Anspruch 1 oder 2, dadurch gekennzeichnet, daß der Ortungseinrichtung (12) Meßwerte über weg und/oder Winkel der Fahrzeugbewegung zugeführt werden und mit dem Pfeildatensatz verglichen werden.

4. Verfahren nach einem der vorhergehenden Ansprüche, dadurch gekennzeichnet, daß die Differenz von gefahrenen Winkeln zu den durch die Nachfolger vorgegebenen Winkel einen vorgegebenen Wert nicht übersteigen darf.

5. Verfahren nach nach einem der vorhergehenden Ansprüche, dadurch gekennzeichnet, daß das ermittelte Minimum betragsmäßig einen vorgegebenen Wert nicht übersteigen darf.

6. Verfahren nach einem der vorhergehenden Ansprüche, dadurch gekennzeichnet, daß nach der Erkennung eines Nachfolgers keine Annäherung an einen weiteren Nachfolger erfolgen darf.

7. Verfahren nach einem der vorhergehenden Ansprüche, dadurch gekennzeichnet, daß ein Netzdatenspeicher (23) vorgesehen ist, der einen Plan aller möglichen Fahrwege enthält.

8. Verfahren nach Anspruch 7, dadurch gekennzeichnet, daß im Netzdatenspeicher (23) alle Routen gespeichert sind.

9. Verfahren nach einem der vorhergehenden Ansprüche, dadurch gekennzeichnet, daß die Ortungsvorrichtung (12) mittels einer Tastvorrichtung (16) auf den Startpunkt aufsetzbar ist.

10. Verfahren nach einem der vorhergehenden Ansprüche, dadurch gekennzeichnet, daß die Ortungsdaten und/oder die Zieldaten bei einer Fahrtunterbrechung zwischengespeichert sind.

11. Verfahren nach einem der vorhergehenden Ansprüche, dadurch gekennzeichnet, daß in Abhängigkeit von der Abweichung der gemessenen Daten von den Netzdaten die Fahrzeugparameter korrigiert werden.

12. Verfahren nach Anspruch 11, dadurch gekennzeichnet, daß aufgrund des Vergleichs zwischen Netzdaten und gemessenen Daten der Radumfang des Fahrzeuges korrigierbar ist.

13. Verfahren nach einem der vorhergehenden Ansprüche, dadurch gekennzeichnet, daß aus den Winkeldifferenzen zwischen Netzdaten und gemessenen Daten im Linienortungsbereich ein Driftkorrekturwert bestimmt wird.

14. Verfahren nach einem der vorhergehenden Ansprüche, dadurch gekennzeichnet, daß aus der Winkeldifferenz der Netzdaten und der gemessenen Daten im Knotenbreich die Spurweite des Fahrzeugs korrigierbar ist.

15. Verfahren nach einem der vorhergehenden Ansprüche, dadurch gekennzeichnet, daß zur Initialisierung des Ortungssystems eine Startpfeil-Identifikation in den Speicher für den Istpfeil geladen wird, daß das Ortungssystem vom Netzdatenspeicher die Identifikationen der Nachfolger des Startpfeils und ihre Attribute erhält, daß der Speicher für das letzte Wegelement und für den Längenüberschuß sowie eine Korrekturgröße zu Null gesetzt werden, und daß auf eine Knotenortung umgeschaltet wird, wenn das Erreichen der Pfeilspitze signalisiert wird.

16. Verfahren nach einem der vorhergehenden Ansprüche, dadurch gekennzeichnet, daß beim Umschalten auf Knotenortung der Speicher für die Fahrzeugposition mit den Koordinaten der Spitze des Istpfeils und der Speicher für den Fahrtwinkel mit dem Auftreffwinkel des Istpfeils geladen wird, und daß zum Inhalt des Speichers für die Fahrzeugposition ein Korrekturvektor addiert wird, dessen Länge dem des Längenüberschusses entspricht, und dessen Richtung dem gespeicherten Winkel am Endknoten entspricht.

17. Verfahren nach einem der vorhergehenden Ansprüche, dadurch gekennzeichnet, daß bei der Knotenortung das sich ergebende gerichtete Kreisbogenelement berechnet und mit dem letzten Fahrtwinkel zur letzten Fahrzeugposition addiert wird, so daß sich als Ergebnis die aktuellen Werte für die Fahrzeugposition und für den Fahrtwinkel ergeben, daß auf das nächste Wegelement gewartet wird, wenn die Länge des Wegelementes negativ wie bei einer Rückwärtsfahrt ist, daß nach dem Knotenortungsverfahren geprüft wird, ob einer der Nachfolger des aktuellen Istpfeils erreicht worden ist, daß auf Linienortung umgeschaltet wird, wenn ein Nachfolger erkannt worden ist, und daß andernfalls auf das nächste Wegelement gewartet wird.

18. Verfahren nach einem der vorhergehenden Ansprüche, dadurch gekennzeichnet, daß beim Umschalten auf die Linienortung der Speicher für die Istpfeil-Identifikation mit der Identifikation des bei der Knotenortung erkannten Nachfolgers geladen wird, daß die Istpfeil-Identifikation zum Routensuchsystem und zum Navigationssystem übertragen wird, und daß der Netzdatenspeicher ebenfalls entsprechend adressiert wird, der daraufhin die Nachfolgerdatensätze liefert, und daß der Pfeillängen-Zähler zu Null gesetzt wird.

19. Verfahren nach einem der vorhergehenden Ansprüche, dadurch gekennzeichnet, daß bei der nach dem Umschalten erfolgenden Linienortung die Länge des letzten Wegelementes unter Berücksichtigung des Vorzeichens zum Pfeillängenzähler addiert wird.

20. Verfahren nach Anspruch 19, dadurch gekennzeichnet, daß für den Fall, daß der Inhalt des Pfeillängenzählers eine der in den Pfeilattributen enthaltenen Ausgabedistanzen überschreitet, das Ortungssystem den Navigationsprozessor veranlaßt, die entsprechende Fahranweisung an das Bedienteil zu übertragen und auszugeben.

**21.** Verfahren nach Anspruch 19 und 20, dadurch gekennzeichnet, daß für den Fall, daß der Inhalt des Pfeillängenzählers die Länge des Istpfeils überschreitet, die Differenz der beiden Größen als Längenüberschuß gespeichert wid, und daß auf eine Knotenortung umgeschaltet wird.

**22.** Verfahren nach einem der vorhergehenden Ansprüche, dadurch gekennzeichnet, daß für den Fall, daß der Inhalt des Pfeillängenzählers negativ wird, sein Inhalt positiv als Längenüberschuß gespeichert, die Identifikation des Istpfeiles durch die seines Gegenpfeils ersetzt wird, und daß mit einer Umschaltung auf Knotenortung fortgefahren wird.

**23.** Verfahren nach einem der vorhergehenden Ansprüche, dadurch gekennzeichnet, daß ein Routensuchsystem (15) vorgesehen ist, das vor jedem Knoten aus der Zahl der möglichen Nachfolgerstrecken diejenigen auswählt, die auf dem jeweils optimalen Weg im Sinne eines Bewertungskriteriums für die Teilstrecke zum Ziel führt.

**24.** Verfahren nach einem der vorhergehenden Ansprüche, dadurch gekennzeichnet, daß vor dem Erreichen des Knotens die Navigationseinrichtung (14) eine Information zum Erreichen der optimalen Nachfolgestrecke ausgibt.

**25.** Verfahren nach Anspruch 24, dadurch gekennzeichnet, daß die Aussendung der Information von der Navigationseinrichtung (15) dadurch ausgelöst wird, daß ein Vergleich mit der ermittelten Position mit den Pfeildaten das baldige Ende des augenblicklichen Pfeils ergibt.

## Claims

**1.** Method for locating land vehicles using a supported compound navigation, having a node locating process in which all the measured values of the vehicle movement are added in an arrow length counter according to size and direction and are compared to the attributes from the arrow data set, and having a line locating process in which all the measured values of the vehicle movement are added according to size and are compared with the corresponding attributes from the arrow data set, characterised in that the locating is carried out in two cyclically repeating phases of which the one phase is the line locating process and the other phase the node locating process, having the following steps:
1. the locating system is installed,
2. a node locating process is switched over to,
3. a node lccating process is carried out,
4. the next travel element is waited for after which the node locating process is continued,
5. the distances of the vehicle position to the bases of the respective subsequent arrows are determined and the subsequent arrow is detected at the base of which a relative minimum is issued and this relative minimum is at the same time the absolute minimum with respect to all the subsequent arrows,
6. with the detection of the absolute minimum of the distance to the position of the arrow bases, the node locating process is terminated and the locating process is automatically set to the coordinates of the base of the detected subsequent arrow,
7. a line locating process is carried out,
8. the next travel element is waited for after which a line locating process is carried out according to 7.,
9. after reaching the end of the arrow, a node locating process is switched over to.

**2.** Method according to Claim 1, characterised in that after each node the subsequent arrow data set is loaded into the locating device (12).

**3.** Method according to Claim 1 or 2, characterised in that measured values relating to travel and/or angle of the vehicle movement are fed to the locating device (12) and are compared with the arrow data set.

**4.** Method according to one of the preceding claims, characterised in that the difference of the angles travelled along from the angles prescribed by the subsequent arrows must not exceed a prescribed value.

**5.** Method according to one of the preceding claims, characterised in that the determined minimum must not exceed in size a prescribed value.

**6.** Method according to one of the preceding claims, characterised in that after the detection of a subsequent arrow a further subsequent arrow must not be approached.

**7.** Method according to one of the preceding claims, characterised in that a network data memory (23) is provided which contains a plan of all the possible routes.

8. Method according to Claim 7, characterised in that all the routes are stored in the network data memory (23).

9. Method according to one of the preceding claims, characterised in that the locating device (12) can be set at the starting point by means of a keying device (16).

10. Method according to one of the preceding claims, characterised in that the locating data and/or the destination data are buffered when a journey is interrupted.

11. Method according to one of the preceding claims, characterised in that the vehicle parameters are corrected as a function of the deviation of the measured data from the network data.

12. Method according to Claim 11, characterised in that the wheel circumference of the vehicle can be corrected on the basis of the comparison between network data and measured data.

13. Method according to one of the preceding claims, characterised in that a drift correction value is determined from the angular differences between network data and measured data in the line locating area.

14. Method according to one of the preceding claims, characterised in that the lane width of the vehicle can be corrected in the node area from the angular difference of the network data and the measured data.

15. Method according to one of the preceding claims, characterised in that, in order to initialise the locating system, a starting arrow identification is loaded into the memory for the actual arrow, in that the locating system receives from the network data memory the identifications of the subsequent arrows of the starting arrow and their attributes, in that the memory for the last travel element and for the excess length as well as a correction variable are set at zero, and in that a node locating process is switched over to if it is signalled that the arrow tip has been reached.

16. Method according to one of the preceding claims, characterised in that, when switching over to the node locating process, the memory for the vehicle position is loaded with the coordinates of the tip of the actual arrow and the memory for the driving angle is loaded with the contact angle of the actual arrow, and in that a correction vector is added to the contents of the memory for the vehicle position, the length of which vector corresponds to that of the excess length, and the direction of which corresponds to the stored angle at the end node.

17. Method according to one of the preceding claims, characterised in that, in the node locating process, the resulting directional circular arc element is calculated and added to the last drive angle to form the last vehicle position so that the current values for the vehicle position and for the drive angle are obtained as a result, in that the next travel element is waited for if the length of the travel element is negative as is the case when reversing, in that it is tested after the node locating method whether one of the subsequent arrows of the current actual arrow has been reached, in that the line locating process is switched over to if a subsequent arrow has been detected and in that otherwise the next travel element is waited for.

18. Method according to one of the preceding claims, characterised in that, when switching over to the line locating process, the memory for the actual arrow identification is loaded with the identification of the subsequent arrow detected during the node locating process, in that the actual arrow identification is transmitted to the route searching system and to the navigation system, and in that the network data memory is likewise correspondingly addressed and subsequently supplies the subsequent arrow data sets, and in that the arrow length counter is set to zero.

19. Method according to one of the preceding claims, characterised in that during the line locating process occurring after the switch-over, the length of the last travel element is added to the arrow length counter taking into account the sign.

20. Method according to Claim 19, characterised in that in the event that the contents of the arrow length counter exceed one of the output distances contained in the arrow attributes, the locating system causes the navigation processor to transmit and output the corresponding vehicle instruction to the operating component.

21. Method according to Claim 19 and 20, characterised in that in the event that the contents of the arrow length counter exceed the length of the actual arrow, the difference of the two variables is stored as an excess length, and in that a node locating process is switched over to.

**22.** Method according to one of the preceding claims, characterised in that in the event that the contents of the arrow length counter are negative, its contents are stored positively as an excess length, the identification of the actual arrow is replaced by that of its corresponding arrow, and in that the process is continued with a switch-over to a node locating process.

**23.** Method according to one of the preceding claims, characterised in that a route searching system (15) is provided which selects before each node those subsequent route sections from the number of possible subsequent route sections which leads to the destination in the optimum way in each case with regard to an evaluation criterion for that part of the route.

**24.** Method according to one of the preceding claims, characterised in that before reaching the node the navigation device (14) issues an item of information relating to achieving the optimum subsequent route section.

**25.** Method according to Claim 24, characterised in that the transmission of the information by the navigation device (15) is triggered in that a comparison of the calculated position with the arrow data yields the imminent end of the momentary arrow.

## Revendications

**1.** Procédé de localisation de véhicules terrestres en utilisant une navigation couplée soutenue, comportant une localisation par noeud pour laquelle toutes les valeurs de mesure du mouvement du véhicule sont additionnées à un compteur de longueur de flèche, avec leur amplitude et leur direction et sont comparées aux attributs provenant du jeu de données de flèches, et avec une localisation par ligne, pour laquelle toutes les valeurs de mesure des mouvements du véhicule sont additionnées en amplitude et sont comparées aux attributs correspondants provenant du jeu des données des flèches, procédé caractérisé en ce que la localisation se fait suivant deux phases répétées de manière cyclique, dont l'une est la localisation par ligne et l'autre la localisation par noeud, avec les étapes suivantes :
1. on installe le système de localisation,
2. on commute sur une localisation par noeud,
3. on effectue une localisation par noeud,
4. on attend l'élément de trajet suivant, puis on poursuit par la localisation par noeud,
5. on détermine les intervalles entre la position du véhicule et les points de base des suiveurs respectifs et on reconnaît le suiveur pour lequel on a un minimum relatif par rapport à son point de base et dont le minimum relatif est en même temps le minimum absolu par rapport à tous les suiveurs,
6. en reconnaissant le minimum absolu de l'intervalle par rapport à la position des points de base de la flèche on termine la localisation par noeud et on applique automatiquement la localisation aux coordonnées du point de base de la flèche de suiveur, reconnue,
7. on effectue une localisation par ligne,
8. on attend l'élément de trajet suivant puis on effectue une localisation par ligne selon le point 7,
9. lorsqu'on atteint l'extrémité de la flèche, on commute sur la localisation par noeud.

**2.** Procédé selon la revendication 1, caractérisé en ce qu'on charge le jeu de données de flèches suivant après chaque noeud dans le dispositif de localisation (12).

**3.** Procédé selon la revendication 1 ou 2, caractérisé en ce que le dispositif de localisation (12) reçoit des valeurs de mesure concernant le trajet et/ou l'angle du mouvement du véhicule et ces valeurs sont comparées à un jeu de données de flèches.

**4.** Procédé selon l'une des revendications précédentes, caractérisé en ce que la différence entre les angles parcourus et les angles prédéterminés par le suiveur ne doit pas dépasser une valeur prédéterminée.

**5.** Procédé selon l'une des revendications précédentes, caractérisé en ce que l'amplitude du minimum, déterminée, ne doit pas dépasser une valeur prédéterminée.

**6.** Procédé selon l'une des revendications précédentes, caractérisé en ce qu'après la reconnaissance d'un suiveur il ne doit plus y avoir de rapprochement sur un autre suiveur.

**7.** Procédé selon l'une des revendications précédentes, caractérisé par une mémoire de données de réseau (23) contenant un plan de tous les trajets possibles.

**8.** Procédé selon la revendication 7, caractérisé en ce que tous les trajets (route) sont mis en mémoire dans la mémoire des données du réseau (23).

9. Procédé selon l'une des revendications précédentes, caractérisé en ce que le dispositif de localisation (12) se met sur le point de départ à l'aide d'un dispositif à clavier (16).

10. Procédé selon l'une des revendications précédentes, caractérisé en ce que les données de localisation et/ou les données d'objectif sont mises provisoirement en mémoire en cas d'interruption de déplacement.

11. Procédé selon l'une des revendications précédentes, caractérisé en ce qu'en fonction de la déviation entre les données mesurées et les données du réseau on corrige les paramètres du véhicule.

12. Procédé selon la revendication 11, caractérisé en ce qu'à partir de la comparaison entre les données du réseau et les données mesurées on corrige le périmètre de roues du véhicule.

13. Procédé selon l'une des revendications précédentes, caractérisé en ce qu'à partir des différences d'angles entre les données du réseau et les données mesurées on détermine une valeur de correction de dérive dans la plage de localisation par ligne.

14. Procédé selon l'une des revendications précédentes, caractérisé en ce qu'à partir de la différence des angles des données du réseau et des données mesurées on corrige la largeur de voie du véhicule dans la zone des noeuds.

15. Procédé selon l'une des revendications précédentes, caractérisé en ce que pour initialiser le système de localisation on charge une identification de flèche de départ dans la mémoire de la flèche réelle, et en ce que le système de localisation reçoit de la mémoire de données du réseau les identifications des suiveurs de la flèche de départ et de leurs attributs, en ce que la mémoire est mise à zéro pour le dernier élément de trajet et pour l'excédent de longueur ainsi que pour une grandeur de correction et en ce qu'on commute sur une localisation par noeud s'il est signalé que la pointe de la flèche est atteinte.

16. Procédé selon l'une des revendications précédentes, caractérisé en ce que lorsqu'on commute sur la localisation par noeud on charge la mémoire de la position du véhicule avec les coordonnées de la pointe de la flèche réelle et la mémoire de l'angle de trajet par l'angle d'arrivée de la flèche réelle et en ce qu'au contenu de la mémoire de la position du véhicule on ajoute un vecteur de correction dont la longueur correspond à l'excédent de longueur et dont la direction correspond à l'angle mis en mémoire au noeud d'extrémité.

17. Procédé selon l'une des revendications précédentes, caractérisé en ce que pour la localisation par noeud on calcule l'élément d'arc de cercle, dirigé qui résulte et on l'ajoute au dernier angle de déplacement pour la dernière position du véhicule de manière à obtenir comme résultat, la valeur instantanée pour la position du véhicule et pour l'angle du véhicule et on attend l'élément de trajet suivant si la longueur de l'élément de trajet est négative comme pour une marche arrière et en ce qu'on vérifie selon le procédé de localisation par noeud si l'un des suiveurs de la flèche réelle actuelle est atteint, et on commute sur la localisation par ligne si un suiveur a été reconnu et par ailleurs on attend l'élément de trajet suivant.

18. Procédé selon l'une des revendications précédentes, caractérisé en ce que lorsqu'on commute sur la localisation par ligne on charge la mémoire de l'identification de la flèche réelle par l'identification du suiveur reconnu par la localisation par noeud, on transmet l'identification de flèche réelle au système de recherche de trajet et au système de navigation et en ce qu'on adresse également de manière correspondante la mémoire des données de réseau, qui fournit les jeux de données de suiveur et on met à zéro le compteur de longueur de flèche.

19. Procédé selon l'une des revendications précédentes, caractérisé en ce qu'après la commutation sur la localisation par ligne on ajoute la longueur du dernier élément de trajet en tenant compte du signe algébrique, au compteur de longueur de flèche.

20. Procédé selon la revendication 19, caractérisé en ce qu'au cas où le contenu du compteur de longueur de flèche dépasse une distance de sortie contenue dans les attributs de flèches, le système de localisation demande au processeur de navigation de transmettre et d'émettre des indications de trajet correspondantes vers la partie de manoeuvre.

21. Procédé selon les revendications 19 et 20, caractérisé en ce qu'au cas où le contenu du compteur de longueur de flèche dépasse la longueur de la flèche réelle on met en mémoire la différence des deux grandeurs comme excédent de longueur et en ce qu'on commute sur la localisation par noeud.

22. Procédé selon l'une des revendications précédentes, caractérisé en ce qu'au cas où le contenu du compteur de longueur de flèche est négatif, on met en mémoire son contenu positif comme excédent de longueur, on remplace l'identification de la flèche réelle par sa flèche antagoniste et on poursuit par une commutation sur la localisation par noeud.

23. Procédé selon l'une des revendications précédentes, caractérisé par un système de recherche de trajet (15), qui avant chaque noeud sélectionne parmi le nombre des trajets de suiveurs possibles, celui qui aboutit, par le chemin optimum dans le sens d'un critère d'exploitation pour le trajet partiel, jusqu'à l'objectif.

24. Procédé selon l'une des revendications précédentes, caractérisé en ce qu'avant d'atteindre le noeud, le dispositif de navigation (14) émet une information pour arriver au trajet de suiveur optimum.

25. Procédé selon la revendication 24, caractérisé en ce qu'on déclenche l'émission de l'information par le dispositif de navigation (14) pour qu'une comparaison avec la position déterminée et les données de flèches aboutissent à la fin prochaine de la flèche instantanée.

FIG.1

EP 0 196 498 B1

EP 0 196 498 B1

FIG. 2

16

EP 0 196 498 B1

FIG. 3

FIG. 4

EP 0 196 498 B1

FIG.5

EP 0 196 498 B1

Linien-ortung 61

Meßwert-Erfassung 60

Knoten-ortung 62

Korrektur der Parameter 69

Stützbe-wegung 63

Drift-Korrektur ermitteln 64

Sourbreite ermitteln 65

Spurweite verarbeiten 66

Radumfang ermitteln 67

Radumfang verarbeiten 68

FIG. 6